# EUROPEAN PATENT SPECIFICATION

(11) **EP 4 510 298 B1**
(45) Date of publication and mention of the grant of the patent: **05.08.2026**
(21) Application number: 23856924.8
(22) Date of filing: 31.05.2023
(51) Int. Cl.: H01M 10/44, H02J 7/02, H02J 7/00, H02J 7/34

(54) **SECONDARY BATTERY ACTIVATION SYSTEM**
AKTIVIERUNGSSYSTEM FÜR SEKUNDÄRBATTERIE
SYSTÈME D'ACTIVATION DE BATTERIE SECONDAIRE

(30) Priority: 23.08.2022 JP 2022132352
(43) Date of publication of application: 19.02.2025
(73) Proprietor: Toyo System Co., Ltd., Iwaki-shi, Fukushima 972-8316 (JP)
(72) Inventor: TOMIZAWA Yutaka, Iwaki-shi, Fukushima 972-8316 (JP); TANNO Satoshi, Iwaki-shi, Fukushima 972-8316 (JP); SHOJI Hideki, Iwaki-shi, Fukushima 972-8316 (JP)
(74) Representative: Schön, Christoph
(86) International application number: PCT/JP2023/020346
(87) International publication number: WO 2024/042806

(56) References cited:
- EP-A1- 3 706 205
- JP-A- 2002 078 229
- JP-A- 2011 182 555
- JP-A- 2017 531 983

## Description

### Technical Field

The present invention relates to a secondary battery activation system that executes secondary battery activation processing.

### Background Art

As the secondary battery activation system, there is known an activation apparatus disclosed in Japanese Patent Application Laid-Open No. 2021-182525. This activation apparatus executes activation processing of assembled secondary batteries when manufacturing the secondary batteries, which includes three first to third loading shelves, three first to third charge/discharge devices, a control device, and the like. Each of the first to third charge/discharge devices has a power supply.

In this activation apparatus, a pre-process, a mid-term process, and a post-process are executed as the activation processing. In this pre-process, charging processing is executed by a first charge/discharge device on secondary batteries stored on a first loading shelf, and in the mid-term process, charge/discharge processing to repeat charging and discharging is executed by a second charge/discharge device on secondary batteries stored on a second loading shelf.

Further, in the post-process, charge/discharge processing to repeat charging and discharging at a power level higher than that in the mid-term process is executed by a third charge/discharge device on secondary batteries stored on a third loading shelf.
EP 3 706 205 A1 discloses a system for charging and discharging a plurality of batteries, said system comprising a battery module, an energy storage system electrically coupled to the battery module, a power source, and a controller, wherein the energy storage system is operable in a first operating state in which energy is transferred from the energy storage system to the battery module to charge the battery module, and a second operating state in which energy is transferred from the battery module to the energy storage system to discharge the battery module, wherein the power source is electrically coupled to the energy storage system and is configured to transfer energy from the power source to the energy storage system based on an amount of stored energy in the energy storage system, and wherein the controller is operably coupled to the battery module and is configured to monitor and control a charging state of the battery module.

### Citation List

### Patent Literature

Patent Literature 1: Japanese Patent Application Laid-Open No. 2021-182525

### Summary of Invention

### Technical Problem

In a secondary battery activation system, a method of converting power into thermal energy using a discharge circuit is generally known as a method of executing a secondary battery discharge process. In the case of this method, power stored in secondary batteries cannot be reused. In addition to this, power consumption increases due to the fact that power is required for air conditioning to process exhaust heat and the like because of converting the discharge power into thermal energy and processing the thermal energy.

Further, as another method of executing the secondary battery discharge process, there is also known a method of using a combination of a commercial AC power supply and a bidirectional AC/DC converter as a power supply to cause the AC/DC converter to convert discharge power of the secondary batteries into AC power and regenerate the AC power. In the case of this method, when the voltage of the secondary batteries is low, the regenerative power cannot be obtained effectively because the power conversion efficiency when the discharge power of the secondary batteries is converted to AC power by the bidirectional AC/DC converter is low.

The present invention has been made to solve the above problems, and it is an object thereof to provide a secondary battery activation system capable of reusing, in a charging process, discharge power in a discharging process when activating secondary batteries, and capable of saving energy.

### Solution to Problem

In order to achieve the above object, a secondary battery activation system as defined in appended claim 1 is provided. Preferred embodiments are defined in the appended dependent claims.

### Brief Description of Drawings

FIG. 1 is a block diagram illustrating the configuration of a secondary battery activation system according to one embodiment of the present invention.
FIG. 2 is a block diagram illustrating the configuration of a power conversion and control unit.
FIG. 3 is a block diagram illustrating the configuration of a bidirectional DC/DC control circuit.
FIG. 4 is a block diagram illustrating the configuration of a charge-discharge power supply unit.
FIG. 5 is a flowchart illustrating process determination processing.
FIG. 6 is a flowchart illustrating a continuation of FIG. 5.
FIG. 7 is a flowchart illustrating activation processing.
FIG. 8 is a flowchart illustrating charge/discharge control processing.
FIG. 9 is a timing chart illustrating an execution state of activation processing in an activation device unit.
FIG. 10 is a timing chart illustrating an execution state of activation processing in the activation system.

### Description of Embodiment

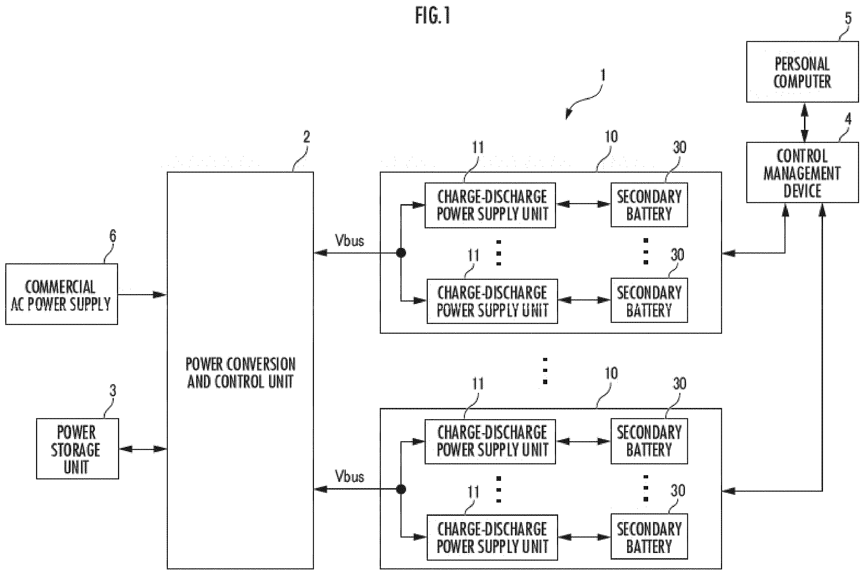

A secondary battery activation system according to the present invention is defined in appended claim 1 and will be described below with reference to the accompanying drawings. An activation system 1 of the present embodiment illustrated in FIG. 1 executes activation processing of secondary batteries 30 assembled when manufacturing the secondary batteries 30, which includes a power conversion and control unit 2, a power storage unit 3, a control management device 4, a personal computer 5, and N (N is plural) activation device units 10 (only two of them are illustrated).

In the case of this activation system 1, the power storage unit 3, the commercial AC power supply 6, and the N activation device units 10 are electrically connected to the power conversion and control unit 2. Further, the personal computer 5 and the N activation device units 10 are electrically connected to the control management device 4.

The power storage unit 3 is composed of a combination of a high-capacity battery and an electrical circuit (both of which are not illustrated), and configured to execute power delivery/reception to and from at least one activation device unit 10 under the control of the power conversion and control unit 2 in a manner to be described later.

As will be described later, the power conversion and control unit 2 is configured to execute control of power delivery/reception between the power storage unit 3 and the activation device unit 10, and control of power supply from the commercial AC power supply 6 to the activation device unit 10. Note that the power conversion and control unit 2 in the present embodiment corresponds to a control circuit unit.

The control management device 4 is configured by a microcomputer including, for example, a CPU, a memory, a storage, and input/output interfaces, to execute transmission/reception of various signals between the activation device unit 10 and the personal computer 5. Specifically, the control management device 4 transmits various detection data from the activation device unit 10 to the personal computer 5, and transmits a command signal to be described later from the personal computer 5 to the activation device unit 10.

The personal computer 5 controls activation processing of the activation device unit 10. As will be described later, the personal computer 5 determines a process of the activation processing of each activation device unit 10 based on various detection data received from the control management device 4, and transmits a command signal representing the process to each activation device unit 10 through the control management device 4. Thus, the execution state of the activation processing in each activation device unit 10 is controlled. Note that the personal computer 5 in the present embodiment corresponds to an activation controller.

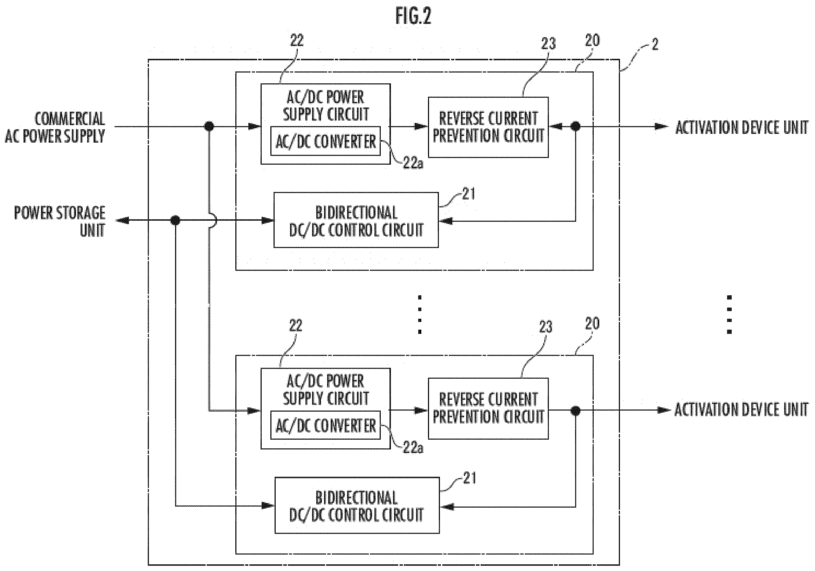

As illustrated in FIG. 2, the power conversion and control unit 2 includes N-set power control circuit units 20, each of which is composed of one bidirectional DC/DC control circuit 21, one AC/DC power supply circuit 22, and one reverse current prevention circuit 23 as one set. The one-set power control circuit unit 20 is configured to control power delivery/reception between the power storage unit 3 and one activation device unit 10 in a manner to be described later.

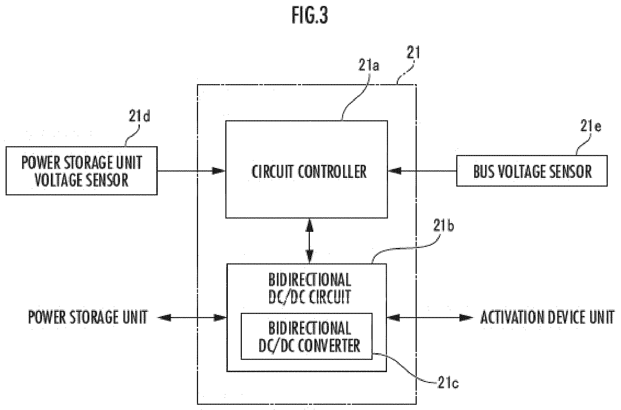

As illustrated in FIG. 3, the bidirectional DC/DC control circuit 21 includes a circuit controller 21a and a bidirectional DC/DC circuit 21b, which is provided between the power storage unit 3 and the activation device unit 10 to be electrically connected to both units. In the following description, voltage in a current path between the bidirectional DC/DC control circuit 21 and a charge-discharge power supply unit 11 of the activation device unit 10 to be described later is called "bus voltage Vbus."

The circuit controller 21a is configured by a microcomputer including, for example, a CPU, a memory, a storage, and input/output interfaces. A power storage unit voltage sensor 21d and a bus voltage sensor 21e are connected to this circuit controller 21a.

This power storage unit voltage sensor 21d detects voltage of the power storage unit 3 (hereinafter called "battery voltage Vbat"), and outputs a detection signal representing the voltage to the circuit controller 21a. Note that the battery voltage Vbat in the present embodiment corresponds to a remaining capacity parameter.

Further, the bus voltage sensor 21e detects bus voltage Vbus and outputs a detection signal representing the bus voltage Vbus to the circuit controller 21a. Note that the bus voltage sensor 21e may also be configured to be connected to a charge-discharge controller 12 to be described later so that a signal indicative of the bus voltage Vbus is input from the charge-discharge controller 12 to the circuit controller 21a.

The bidirectional DC/DC circuit 21b includes a bidirectional DC/DC converter 21c and various electrical circuits (not illustrated). The bidirectional DC/DC converter 21c is controlled by the circuit controller 21a to execute discharging operation to transform DC power from the power storage unit 3 and supply the transformed DC power to the activation device unit 10, and charging operation to transform the DC power from the activation device unit 10 and supply the transformed DC power to the power storage unit 3.

As will be described later, the circuit controller 21a controls the bidirectional DC/DC converter 21c based on the battery voltage Vbat and the operating state of the activation device unit 10 to control charging and discharging between the power storage unit 3 and the activation device unit 10.

Further, the AC/DC power supply circuit 22 is provided between the commercial AC power supply 6 and the reverse current prevention circuit 23 to be connected to both. The AC/DC power supply circuit 22 is configured to include an AC/DC converter 22a and various electrical circuits (not illustrated) to convert AC voltage input from the commercial AC power supply 6 into DC voltage by the AC/DC converter 22a and to always output the converted DC voltage to the side of the reverse current prevention circuit 23. In the following description, voltage on the output side of the AC/DC power supply circuit 22 is called "power supply voltage V1."

Further, the reverse current prevention circuit 23 is composed of a combination of a diode and an FET, and an output end thereof is electrically connected to a current path between the bidirectional DC/DC control circuit 21 and the charge-discharge power supply unit 11 of the activation device unit 10.

This reverse current prevention circuit 23 is configured to always prevent DC from the current path from flowing to the side of the AC/DC power supply circuit 22 when the power supply voltage V1 is less than the bus voltage Vbus, or to always flow the D from the AC/DC power supply circuit 22 to the side of the current path when the power supply voltage V1 is the bus voltage Vbus or more.

Next, the activation device unit 10 will be described. As illustrated in FIG. 1, the activation device unit 10 includes M (M is plural) charge-discharge power supply units 11 (only two of them are illustrated). These charge-discharge power supply units 11 execute activation processing of the secondary batteries 30, and each secondary battery 30 to be activated is connected to each charge-discharge power supply unit 11 during the activation processing. In other words, the activation device unit 10 is so configured that activation processing of M secondary batteries 30 can be executed simultaneously.

Further, in one cycle of activation processing, a charging process, a pausing process, a discharging process, and a pausing process are executed in sequence as the activation processing. In this case, activation processing for more than one cycle is executed on each of the secondary batteries 30. The charging process is a process in which charging to the secondary battery 30 is executed, and the discharging process is a process in which discharging from the secondary battery 30 is executed.

In the case of the present embodiment, as will be described later, a first discharging process or a second discharging process is executed as the discharging process based on whether or not the power storage unit 3 is ready for charging. This first discharging process is a process of charging power released from the secondary battery 30 to the power storage unit 3 when the power storage unit 3 is ready for charging. Further, the second discharging process is a process of converting power, released from the secondary battery 30 when the power storage unit 3 is not ready for charging, into thermal energy in a discharge circuit 13a to be described later, and discharging the thermal energy.

Further, the pausing process is a process in which charging to the secondary battery 30 and discharging from the secondary battery 30 are stopped. Note that one cycle of activation processing may be configured to execute the discharging process, the pausing process, the charging process, and the pausing process in this order.

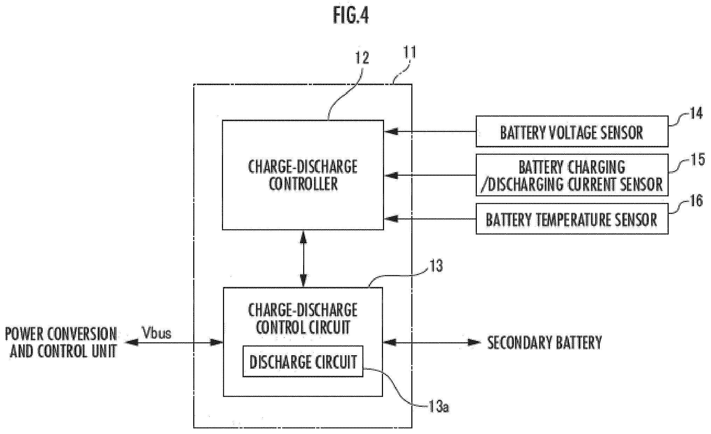

As illustrated in FIG. 4, the charge-discharge power supply unit 11 includes a charge-discharge controller 12 and a charge-discharge control circuit 13. The charge-discharge control circuit 13 includes a discharge circuit 13a and various electrical circuits (not illustrated), which is connected to the charge-discharge controller 12 and the secondary battery 30. The charge-discharge control circuit 13 is controlled by the charge-discharge controller 12 to execute charging/discharging operation of the secondary battery 30 connected to the charge-discharge control circuit 13.

Further, the discharge circuit 13a converts power of the secondary battery 30 connected to the charge-discharge control circuit 13 into thermal energy and discharges the thermal energy while the second discharging process described above is being executed.

On the other hand, the charge-discharge controller 12 is configured by a microcomputer including a CPU, a memory, a storage, and input/output interfaces. A battery voltage sensor 14, a battery charging/discharging current sensor 15, and a battery temperature sensor 16 are electrically connected to this charge-discharge controller 12. Note that the battery temperature sensor 16 may also be configured to be electrically connected to the control management device 4 instead of the charge-discharge controller 12.

The battery voltage sensor 14 detects voltage Vsb of the secondary battery 30 connected to the charge-discharge power supply unit 11 (hereinafter called "battery voltage Vsb"), and outputs a detection signal representing the battery voltage Vsb to the charge-discharge controller 12. Further, the battery charging/discharging current sensor 15 detects charging current or discharging current of the secondary battery 30 connected to the charge-discharge power supply unit 11 (hereinafter called "charging/discharging current Isb"), and outputs a detection signal representing the charging/discharging current Isb to the charge-discharge controller 12.

Further, the battery temperature sensor 16 detects the temperature Tsb of the secondary battery 30 connected to the charge-discharge power supply unit 11 (hereinafter called "battery temperature Tsb"), and outputs a detection signal representing the battery temperature Tsb to the charge-discharge controller 12.

Based on the detection signals of the above three sensors 14 to 16, the charge-discharge controller 12 acquires the battery voltage Vsb, the charging/discharging current Isb, and the battery temperature Tsb, and transmits various detection data including these pieces of data to the personal computer 5 through the control management device 4.

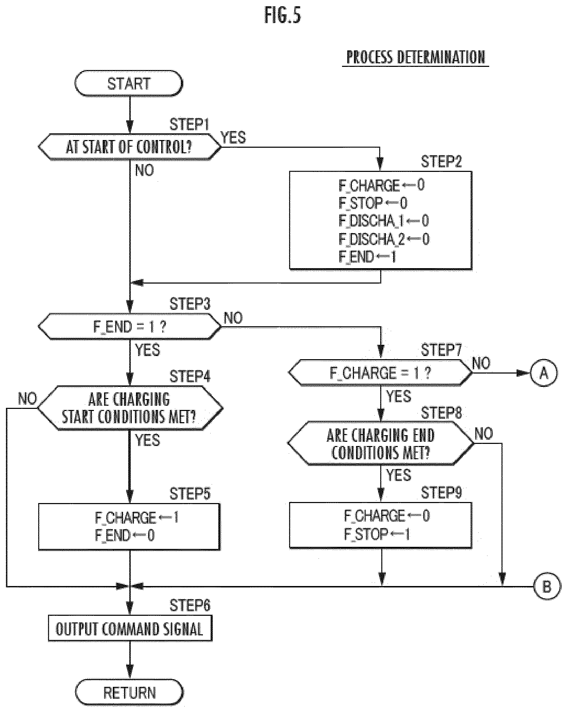

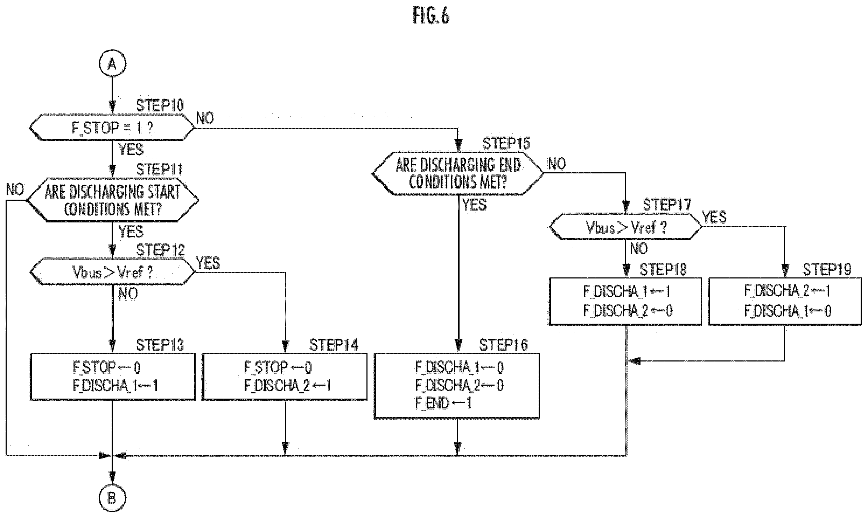

Referring next to FIG. 5 and FIG. 6, process determination processing will be described. This process determination processing is to determine a process of activation processing of the activation device unit 10 on the personal computer 5 based on preset conditions and the various detection data described above. More specifically, this process determination processing is executed at a predetermined control cycle for each activation device unit 10. Note that it is assumed that various flag values to be described later are stored in a storage device inside the personal computer 5.

In this process determination processing, it is first determined whether or not the current control timing is at the start of control (FIG. 5/STEP1). When this determination is positive (FIG. 5/STEP1...YES) and the current control timing is at the start of control, a charging process flag F_CHARGE, a pausing process flag F_STOP, a first discharging process flag F_DISCHA_1, and a second discharging process flag F_DISCHA_2 are all set to "0," and a discharging process end flag F_END is set to "1" (FIG. 5/STEP2).

On the other hand, when the above determination is negative (FIG. 5/STEP1...NO) and the current control timing is not at the start of control, or after five flag setting processing is executed as mentioned above, it is determined whether or not the discharging process end flag F_END is "1" (FIG. 5/STEP3). This discharging process end flag F_END is set to "1" at the start of control as mentioned above, or set to "1" when the activation device unit 10 as a control target is in the pausing process after the discharging process is ended.

When this determination is positive (FIG. 5/STEP3...YES), that is, at the start of control, or when the activation device unit 10 as the control target is in the pausing process after the discharging process is ended, it is determined whether or not charging start conditions are met (FIG. 5/STEP4).

The charging start conditions are charging process start conditions in the activation device unit 10, and when conditions (c1) and (c2) below are both met, it is determined that the charging start conditions are met, and in the other cases, it is determined that the charging start conditions are not met.
(c1) The battery voltage Vsb of a secondary battery 30 for which the activation processing is to be performed is within a predetermined voltage range.
(c2) The battery temperature Tsb of the secondary battery 30 for which the activation processing is to be performed is within a predetermined temperature range.

When the above determination is negative (FIG. 5/STEP4...NO) and the charging start conditions are not met, a command signal is output to the control management device 4 (FIG. 5/STEP6). This command signal contains the above five flag values. After that, this processing is ended.

On the other hand, when this determination is positive (FIG. 5/STEP4...YES) and the charging start conditions are met, the charging process flag F_CHARGE is set to "1" and the discharging process end flag F_END is set to "0" (FIG. 5/STEP5) to represent that effect. In this case, when the charging process flag F_CHARGE = 1, the charging process is executed in the activation device unit 10 in a manner to be described later.

Next, as described above, the command signal is output to the control management device 4 (FIG. 5/STEP6), and this processing is ended after that.

On the other hand, when the determination described above is negative (FIG. 5/STEP3... NO) and the discharging process end flag F_END = 0, it is determined whether or not the charging process flag F_CHARGE is "1" (FIG. 5/STEP7).

When this determination is positive (FIG. 5/STEP7...YES) and the charging process is being executed in the activation device unit 10, it is determined whether or not charging end conditions are met (FIG. 5/STEP8). The charging end conditions are charging process end conditions in the activation device unit 10, and when conditions (c3) and (c4) below are met, it is determined that the charging end conditions are met, and in the other cases, it is determined that charging end conditions are not met.
(c3) The battery voltage Vsb reaches a predetermined full-charge value.
(c4) A predetermined set time has passed since the start of the charging process.

When this determination is negative (FIG. 5/STEP8...NO) and the charging end conditions are not met, the command signal is output to the control management device 4 (FIG. 5/STEP6) as described above, and this processing is ended after that.

On the other hand, when this determination is positive (FIG. 5/STEP8... YES) and the charging end conditions are met, the charging process flag F_CHARGE is set to "0" and the pausing process flag F_STOP is set to "1" (FIG. 5/STEP9) to represent that the pausing process should be executed by ending the charging process.

Next, as described above, the command signal is output to the control management device 4 (FIG. 5/STEP6), and this processing is ended after that.

On the other hand, when the determination described above is negative (FIG. 5/STEP7...NO) and the charging process is not executed in the activation device unit 10, it is determined whether or not the pausing process flag F_STOP is "1" (FIG. 6/STEP10).

When this determination is positive (FIG. 6/STEP10... YES) and the pausing process after the charging process is being executed, it is determined whether or not discharging start conditions are met (FIG. 6/STEP11).

The discharging start conditions are discharging process start conditions in the activation device unit 10, and when conditions (c5) and (c6) below are met, it is determined that the discharging start conditions are met, and in the other cases, it is determined that the discharging start conditions are not met.
(c5) The battery temperature Tsb is a predetermined determination value or less.
(c6) The battery voltage Vsb is within a predetermined voltage range.

When this determination is negative (FIG. 6/STEP11...NO) and the discharging start conditions are not met, the command signal is output to the control management device 4 as described above (FIG. 5/STEP6), and this processing is ended after that.

On the other hand, when this determination is positive (FIG. 6/STEP11...YES) and the discharging start conditions are met, it is determined whether or not the bus voltage Vbus is larger than a predetermined value Vref (FIG. 6/STEP12).

When this determination is negative (STEP12...NO), the pausing process flag F_STOP is set to "0" and the first discharging process flag F_DISCHA_1 is set to "1" (FIG.6/STEP13) to represent that the first discharging process should be started by ending the pausing process. In this case, when the first discharging process flag F_DISCHA_1 = 1, the first discharging process is executed in the activation device unit 10 in a manner to be described later.

Next, as described above, the command signal is output to the control management device 4 (FIG. 5/STEP6), and this processing is ended after that.

On the other hand, when this determination is positive (FIG. 6/STEP12...YES) and Vbus > Vref is satisfied, the pausing process flag F_STOP is set to "0" and the second discharging process flag F _DISCHA_2 is set to "1" to represent that the second discharging process should be executed by stopping the pausing process (FIG. 6/STEP14). In this case, when the second discharging process flag F _DISCHA_2 = 1, the second discharging process is executed in the activation device unit 10 in a manner to be described later.

Next, as described above, the command signal is output to the control management device 4 (FIG. 5/STEP6), and this processing is ended after that.

On the other hand, when the determination described above is negative (FIG. 6/STEP10...NO) and the first discharging process or the second discharging process is being executed, it is determined whether or not discharging end conditions are met (FIG. 6/STEP15).

The discharging end conditions are end conditions for the first discharging process or the second discharging process in the activation device unit 10, and when conditions (c7) and (c8) below are met, it is determined that the discharging end conditions are met, and in the other cases, it is determined that the discharging end conditions are not met.
(c7) The battery voltage Vsb is a predetermined end value or less. This predetermined end value is set smaller than the predetermined full-charge value described above.
(c8) A predetermined set time has passed since the start of the discharging process.

When this determination is positive (FIG. 6/STEP15...YES) and the discharging end conditions are met, the first discharging process flag F_DISCHA_1 and the second discharging process flag F_DISCHA_2 are set to "0" and the discharging process end flag F_END is set to "1" (FIG. 6/STEP16) to represent that the pausing process should be executed by ending the first discharging process or the second discharging process.

Next, as described above, the command signal is output to the control management device 4 (FIG. 5/STEP6), and this processing is ended after that.

On the other hand, when this determination is negative (FIG. 6/STEP15...NO) and the discharging end conditions are not met, it is determined whether or not the bus voltage Vbus is larger than the predetermined value Vref (FIG. 6/STEP17).

When this determination is negative (FIG. 6/STEP17...NO) and Vbus ≤ Vref is satisfied, the first discharging process flag F_DISCHA_1 is set to "1" and the second discharging process flag F_DISCHA_2 is set to "0" (FIG. 6/STEP18) to represent that the first discharging process should be executed.

Next, as described above, the command signal is output to the control management device 4 (FIG. 5/STEP6), and this processing is ended after that.

On the other hand, when this determination is positive (FIG. 6/STEP17...YES) and Vbus > Vref is satisfied, the second discharging process flag F_DISCHA_2 is set to "1" and the first discharging process flag F_DISCHA_1 is set to "0" to represent that the second discharging process should be executed (FIG. 6/STEP19).

Next, as described above, the command signal is output to the control management device 4 (FIG. 5/STEP6), and this processing is ended after that.

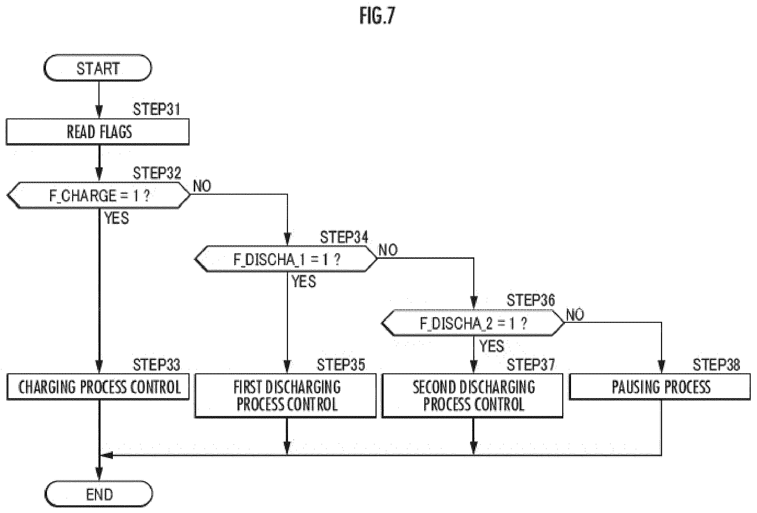

Referring next to FIG. 7, activation processing in the activation device unit 10 will be described. In this activation processing, each process of the activation processing is executed based on the five flag values contained in the command signal from the personal computer 5 simultaneously in respective M charge-discharge controllers 12 of the activation device unit 10 in a manner to be described below.

As illustrated in FIG. 7, the five flag values contained in the command signal are first read (FIG. 7/STEP31).

Next, it is determined whether or not the charging process flag F_CHARGE described above is "1" (FIG. 7/STEP32).

When this determination is positive (FIG. 7/STEP32... YES) and the charging process flag F_CHARGE = 1, charging process control is executed (FIG. 7/STEP33). In this charging process control, the charge-discharge control circuit 13 of the activation device unit 10 is so controlled that power from the power conversion and control unit 2 is supplied to the secondary battery 30. In other words, the charging process in the activation device unit 10 is executed. After the charging process control is executed as described above, this processing is ended.

On the other hand, when the determination described above is negative (FIG. 7/STEP32...NO) and the charging process flag F_CHARGE = 0, it is determined whether or not the first discharging process flag F_DISCHA_1 is "1" (FIG. 7/STEP34).

When this determination is positive (FIG. 7/STEP34...YES) and the first discharging process flag F_DISCHA_1 = 1, first discharging process control is executed (FIG. 7/STEP35). In this first discharging process control, the charge-discharge control circuit 13 of the activation device unit 10 is so controlled that power of the secondary battery 30 connected to the activation device unit 10 is released to the side of the power conversion and control unit 2. In other words, the discharging process (the first discharging process) in the activation device unit 10 is executed. After the first discharging process control is executed as above, this processing is ended.

On the other hand, when the determination described above is negative (FIG. 7/STEP34... NO) and the first discharging process flag F_DISCHA_1 = 0, it is determined whether or not the second discharging process flag F_DISCHA_2 is "1" (FIG. 7/STEP36).

When this determination is positive (FIG. 7/STEP36... YES) and the second discharging process flag F_DISCHA_2 = 1, second discharging process control is executed (FIG. 7/STEP37). In this second discharging process control, the discharge circuit 13a in the charge-discharge control circuit 13 of the activation device unit 10 is so controlled that power of the secondary battery 30 connected to the activation device unit 10 is converted to thermal energy by the discharge circuit 13a and released to the outside. In other words, the discharging process (the second discharging process) in the activation device unit 10 is executed. After the second discharging process control is executed as above, this processing is ended.

On the other hand, when the determination described above is negative (FIG. 7/STEP36...NO) and the second discharging process flag F_DISCHA_2 = 0, that is, when the pausing process flag F_STOP = 1 or the discharging process end flag F _END = 1, the pausing process is executed (FIG. 7/STEP38). In this pausing process, the operation of the charge-discharge control circuit 13 of the activation device unit 10 is stopped. This results in a state where power does not flow between the activation device unit 10 and the power conversion and control unit 2. After the pausing process is executed as above, this processing is ended.

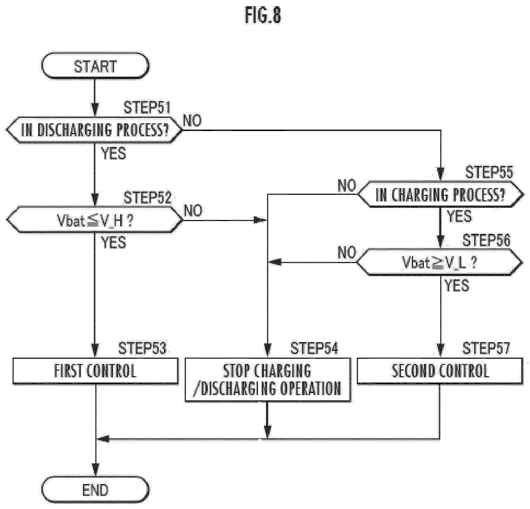

Referring next to FIG. 8, charge/discharge control processing in the power conversion and control unit 2 will be described. This charge/discharge control processing controls charging and discharging between each power control circuit unit 20 and the activation device unit 10 connected to the power control circuit unit 20, and the charge/discharge control processing is executed by each circuit controller 21a.

As illustrated in FIG. 8, in this charge/discharge control processing, it is first determined whether or not the activation device unit 10 connected to the power control circuit unit 20 is in the discharging process (FIG. 8/STEP51). This determination is executed based on a change in bus voltage Vbus.

When this determination is positive (STEP51... YES) and the activation device unit 10 is in the discharging process, it is determined whether or not the battery voltage Vbat is a predetermined upper limit value V_H or less (FIG. 8/STEP52). This predetermined upper limit value V_H is a threshold value indicating that the power storage unit is ready for charging.

When this determination is positive (FIG. 8/STEP52...YES) and Vbat ≤ V_H is satisfied, first control is executed (FIG. 8/STEP53). In this first control, power from the activation device unit 10 is voltage-converted by the bidirectional DC/DC converter 21c and charged to the power storage unit 3. After the first control is executed as above, this processing is ended.

On the other hand, when the determination described above is negative (FIG. 8/STEP52...NO) and Vbat > V_H is satisfied, charging operation to the power storage unit 3 is stopped (FIG. 8/STEP54). This results in a state where charging current does not flow through the bidirectional DC/DC converter 21c. After that, this processing is ended.

Note that, in a case where the activation device unit 10 is in the discharging process as above, when the charging operation to the power storage unit 3 in the power conversion and control unit 2 is stopped, such a state that the bus voltage Vbus exceeds the predetermined value Vref occurs as described above, and the second discharging process is executed in the activation device unit 10.

On the other hand, when the determination described above is negative (STEP51...NO) and the activation device unit 10 is not in the discharging process, it is determined whether or not the activation device unit 10 is in the charging process (FIG. 8/STEP55). This determination is executed based on the change in bus voltage Vbus described above.

When this determination is negative (FIG. 8/STEP55...NO) and the activation device unit 10 does not execute both the charging process and the discharging process, that is, when the activation device unit 10 is in the pausing process, the charging/discharging operation is stopped as described above (FIG. 8/STEP54). After that, this processing is ended.

On the other hand, when this determination is positive (FIG. 8/STEP55... YES) and the activation device unit 10 is in the charging process, it is determined whether or not the battery voltage Vbat is a predetermined lower limit value V_L or more (FIG. 8/STEP56). This predetermined lower limit value V_L is a threshold value indicating that the power storage unit is ready for discharging.

When this determination is positive (FIG. 8/STEP56...YES) and Vbat ≥ V_L is satisfied, second control is executed (FIG. 8/STEP57). In this second control, power of the power storage unit 3 is voltage-converted by the bidirectional DC/DC converter 21c and supplied to the activation device unit 10. After the second control is executed as above, this processing is ended.

On the other hand, when this determination is negative (FIG. 8/STEP56... NO) and Vbat < V_L is satisfied, the charging/discharging operation is stopped as described above (FIG. 8/STEP54). After that, this processing is ended.

Note that, in a case where the activation device unit 10 is in the charging process as above, when the charging/discharging operation in the power conversion and control unit 2 is stopped, the bus voltage Vbus is so reduced that the power supply voltage V1 becomes the bus voltage Vbus or more to supply DC power from the AC/DC power supply circuit 22 to the activation device unit 10.

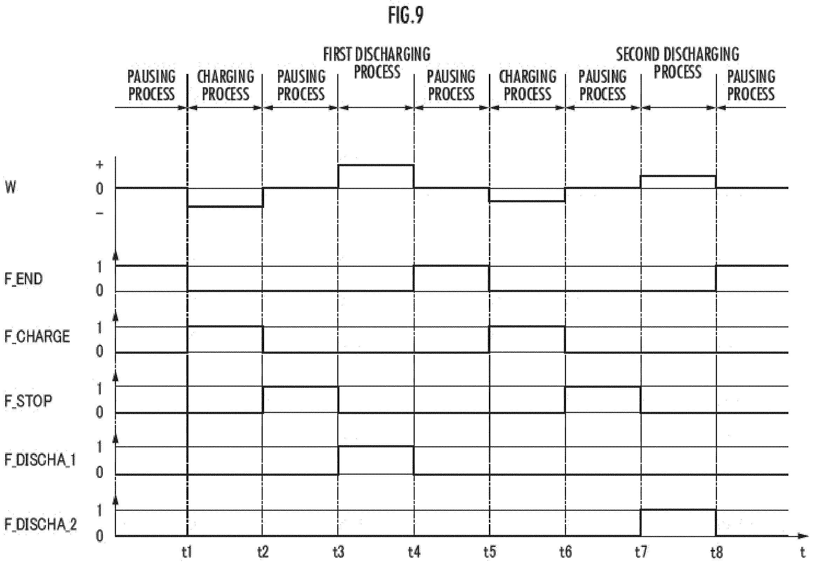

Referring next to FIG. 9, an example of control results when the above various control processing of FIG. 5 to FIG. 8 is executed will be described. W in FIG. 9 represents the amount of power change in any activation device unit 10. More specifically, the fact that the amount of change W is a positive value represents that power is being released from the secondary battery 30, the fact that the amount of change W is a negative value represents that power is being charged to the secondary battery 30, and the fact that the amount of change W is 0 value represents that charging/discharging of the secondary battery 30 is being stopped.

As illustrated in FIG. 9, when the activation device unit 10 is in the pausing process, the charging process flag F_CHARGE is set to "1" at the timing (time t1) when the charging start conditions for the charging process is met, and the charging process is executed after that.

Then, as the progress of the charging process, charging to the secondary battery 30 progresses, the pausing process flag F_STOP is set to "1" at the timing (time t2) when the charging end conditions are met, and the pausing process is executed after that.

Then, in a case where the charge-discharge power supply unit 11 is in the pausing process after the end of the charging process, when Vbus ≤ Vref is satisfied at the timing (time t3) at which the discharging start conditions are met, the first discharging process flag F_DISCHA_1 is set to "1," and the first discharging process is executed after that. On the other hand, if Vbus > Vref is satisfied at the timing (time t3) when the discharging start conditions are met, the second discharging process flag F_DISCHA_2 will be set to "1," and the second discharging process will be executed after that. Note that FIG. 9 illustrates an example in which Vbus ≤ Vref is satisfied continuously between time t3 and time t4.

Then, as the first discharging process continuously progresses due to the fact that the state where Vbus ≤ Vref continues, the discharging process end flag F_END is set to "1" at the timing (time t4) when the discharging end conditions are met, and the pausing process is executed after that. Thus, the activation processing for one cycle is ended.

After that, during the pausing process, the charging process flag F_CHARGE is set to "1" at the timing (time t5) when the charging start conditions for the charging process are met, and the charging process is executed after that.

Then, as the progress of the charging process, charging to the secondary battery 30 progresses, and the pausing process flag F_STOP is set to "1" at the timing (time t6) when the charging end conditions are met, and the pausing process is executed after that.

After that, in a case where the charge-discharge power supply unit 11 is in the pausing process, if Vbus ≤ Vref is satisfied at the timing (time t7) when the discharging start conditions are met, the first discharging process flag F_DISCHA_1 will be set to "1," and the first discharging process will be executed after that. On the other hand, when Vbus > Vref is satisfied at the timing (time t7) at which the discharging start conditions are met, the second discharging process flag F_DISCHA_2 is set to "1," and the second discharging process is executed after that. Note that FIG. 9 illustrates an example in which Vbus > Vref is satisfied continues between time t7 and time t8.

Then, as the second discharging process continuously progresses due to the fact that the state where Vbus > Vref continues, the discharging process end flag F_END is set to "1" at the timing (time t8) when the discharging end conditions are met, and the pausing process is executed after that. Thus, the activation processing for one cycle is ended.

Note that FIG. 9 illustrates an example in which activation processing for two cycles is executed on the secondary battery 30, but the activation system has just to be configured to execute activation processing of the secondary battery 30 for one or more cycles.

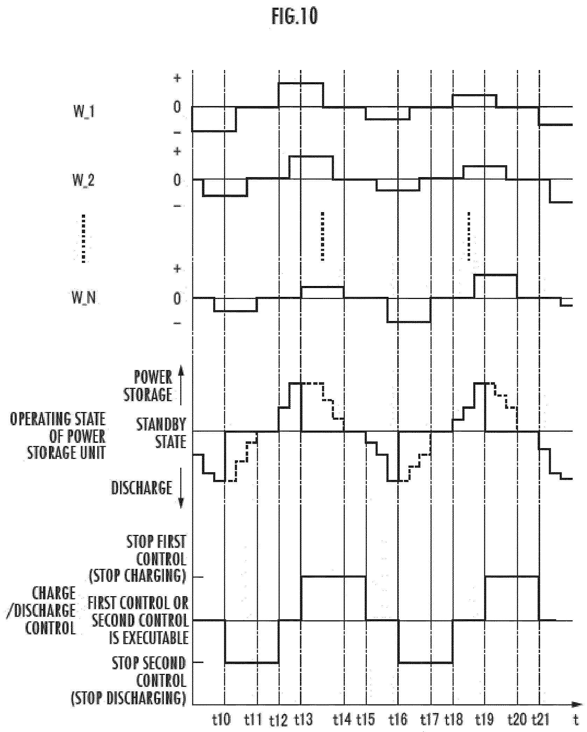

Referring next to FIG. 10, an example of operation results of the activation system 1 when activation processing is executed in respective activation device units 10 as described above will be described. Note that FIG. 10 illustrates an operation example when the activation processing is executed in the first, second, and N-th activation device units 10 in order.

Further, W_1, W_2, and W_N in FIG. 10 represent the amounts of power changes in the entire first, second, and N-th activation device units 10, respectively. More specifically, the fact that the amount of change W_1 is a positive value represents that power is being released from the first activation device unit 10, and the fact that the amount of change W_1 is a negative value represents that power is being charged to the first activation device unit 10. Further, the fact that the amount of change W_1 is 0 value represents that charge/discharge in the first activation device unit 10 is being stopped.

As illustrated in FIG. 10, the charging process is executed in the first, second, and the N-th activation device units 10 in order, and the remaining amount of charge in the power storage unit 3 is reduced to reduce the battery voltage Vbat as the second control described above is automatically executed by the N bidirectional DC/DC control circuits 21.

Then, at the timing (time t10) when Vbat < V_L is satisfied, the second control in the charge/discharge control processing of FIG. 8 described above is stopped to make the power storage unit 3 become a standby state. Along with that, the bus voltage Vbus is reduced and V1 ≥ Vbus is satisfied to make DC from the AC/DC power supply circuit 22 flow to the side of the activation device unit 10.

Note that, if the second control described above is not stopped at the timing (time t10) when Vbat < V_L is satisfied, the power storage unit 3 will result in executing discharging operation until the timing (time t11) when all of the three activation device units 10 become in the pausing process as indicated by a dashed line in FIG. 10.

In contrast, in the activation system 1 of the present embodiment, it is found that the power storage unit 3 can avoid over-discharging by stopping the second control mentioned above to make the power storage unit 3 become the standby state.

Then, after the timing (time t12) of starting the first discharging process in the first activation device unit 10, the remaining amount of charge in the power storage unit 3 increases as the first control is executed in the charge/discharge control processing of FIG. 8 described above.

Then, at the timing (time t13) when Vbat > V_H is satisfied as the first discharging process progresses, the first control described above is stopped to make the power storage unit 3 become the standby state.

Along with that, since the bus voltage Vbus increases and Vbus > Vref is satisfied, the second discharging process described above results in being executed in the three activation device units 10 after that.

Note that, if the first control described above is not stopped by the three bidirectional DC/DC control circuits 21 at the timing (time t13) when Vbat > V_H is satisfied, the power storage unit 3 will result in executing charging operation until the timing (time t14) when all of the three activation device units 10 become in the pausing process as indicated by a dashed line in FIG. 10.

In contrast, in the activation system 1 of the present embodiment, it is found that the power storage unit 3 can avoid over-charging by stopping the first control mentioned above to make the power storage unit 3 become the standby state.

Then, in a period (between time t15 to time t21) after the end of the pausing process and the start of the charging process in the first activation device unit 10, the same operation as above is executed.

As described above, according to the activation system 1 of the present embodiment, in a case where at least one of the N activation device units 10 is executing the first discharging process, when the battery voltage Vbat is the predetermined upper limit value V_H or less, the first control is executed in the charge/discharge control processing of FIG. 8. Therefore, power released from the activation device unit 10 that is executing the first discharging process is charged to the power storage unit 3. In other words, when the power storage unit 3 is ready for charging, the power released from the first activation device unit 10 that is in the first discharging process is charged to the power storage unit 3.

Further, in a case where at least one of the N activation device units 10 is executing the charging process, when the battery voltage Vbat is the predetermined lower limit value V_L or more, the second control is executed in the charge/discharge control processing of FIG. 8. Therefore, power of the power storage unit 3 is supplied to the activation device unit 10 that is executing the charging process. In other words, when the power storage unit 3 is ready for discharging, the power of the power storage unit 3 is supplied to the activation device unit 10 that is in the charging process.

Thus, when the power storage unit 3 is ready for charging, the power released from the activation device unit 10 that is in the first discharging process can be charged to the power storage unit 3, while when the power storage unit 3 is ready for discharging, the power of the power storage unit 3 can be supplied to the activation device unit 10 that is in the charging process. As a result, the power discharged from the activation device unit 10 in the first discharging process can be reused effectively for charging to the activation device unit 10 that is in the charging process.

Further, when the power storage unit 3 is not ready for charging due to the fact that the battery voltage Vbat exceeds the predetermined upper limit value V_H, the first control is stopped in the charge/discharge control processing of FIG. 8. At that time, when the discharging start conditions are met in the activation device unit 10, the second discharging process is executed due to the fact that bus voltage Vbus exceeds the predetermined value Vref. In other words, the discharge circuits 13a are so controlled that power of the plural secondary batteries 30 in the activation device unit 10 is discharged. As described above, when the power storage unit 3 is not ready for charging, charging to the power storage unit 3 is stopped. Therefore, the power storage unit 3 can avoid over-charging, and the power storage unit 3 can be protected.

Further, according to the activation system 1 of the present embodiment, in the case where at least one activation device unit 10 is executing the charging process, when the battery voltage Vbat is less than the predetermined lower limit value V_L, the second control is stopped in the charge/discharge control processing of FIG. 8, and AC power of the commercial AC power supply 6 is supplied to the second activation device unit 10 through the AC/DC power supply circuit 22 and the reverse current prevention circuit 23.

Therefore, even when power supply from the power storage unit 3 to the activation device unit 10 that is executing the charging process is stopped due to the fact that the power storage unit 3 is not ready for discharging, the charging process in the activation device unit 10 can be executed properly by power supply from the commercial AC power supply 6. In addition to this, as described above, since discharge power from the secondary battery 30 during the discharging process can be reused effectively for charging to the secondary battery 30 in the charging process, the power supply from the commercial AC power supply 6 can be suppressed. As a result, leveling of power load can be performed as a whole system.

Note that the embodiment gives the example using the personal computer 5 as the activation controller, but all the activation controller has to do is to control the execution of the charging process and the discharging process in the activation device unit 10. For example, a microcomputer including a CPU, a memory, and a storage, input/output interfaces may also be used as the activation controller.

On the other hand, the embodiment gives the example in which the commercial AC power supply is used as the power supply, but a DC generator, an AC generator, or a high-capacity battery may also be used instead of the commercial AC power supply.

Further, the configuration may be such that a charging rate SOC (State of Charge) as the remaining capacity parameter is calculated by the circuit controller 21a, and this charging rate SOC is compared with a predetermined lower limit value SOC_L and a predetermined upper limit value SOC_H to execute/stop the charge/discharge control between the activation device unit 10 and the power storage unit 3.

Further, the embodiment gives the example of the configuration in which one-set power control circuit includes the reverse current prevention circuit 23, but the configuration may also be such that an electrical circuit such as a relay is used instead of this reverse current prevention circuit 23 and the operation of this electrical circuit is controlled by the charge-discharge controller 12 to control supply/stop of power output from the AC/DC power supply circuit 22 to the side of the activation device unit 10.

On the other hand, the embodiment gives the example in which the discharge circuit 13a is provided in the activation device unit 10, but instead of this example, the configuration may also be such that the discharge circuit 13a is provided outside of the activation device unit 10.

### Description of Reference Numerals

- 1: activation system
- 2: power conversion and control unit (control circuit unit)
- 3: power storage unit
- 5: personal computer (activation controller)
- 6: commercial AC power supply
- 10: activation device unit
- 13a: discharge circuit
- 21a: circuit controller
- 21b: bidirectional DC/DC circuit
- 21c: bidirectional DC/DC converter
- 22: AC/DC power supply circuit
- 22a: AC/DC converter
- 30: secondary battery
- Vbat: voltage of power storage unit (remaining capacity parameter)
- V_H: predetermined upper limit value
- V_L: predetermined lower limit value

## Claims

1. A secondary battery activation system (1) for executing activation processes including a charging process to execute charging to a secondary battery (30) and a discharging process to execute discharging from the secondary battery (30) in order to activate the secondary battery (30), comprising:
a power storage unit (3) capable of charging/discharging power;
N (N is plural) activation device units (10), each of which is connected to a plurality of the secondary batteries (30), respectively, and configured to be able to execute the charging process and the discharging process;
an activation controller (5) that controls the execution of the charging process and the discharging process in the N activation device units (10);
a control circuit unit (2) connected to the power storage unit (3) and the N activation device units (10) and configured to be able to execute power delivery/reception operation between the power storage unit (3) and the activation device units (10); and
a circuit controller (21a) that controls the power delivery/reception operation by the control circuit unit (2), **characterized in that**
in a case where a first activation device unit (10) as at least one of the N activation device units (10) is controlled by the activation controller (5) to execute the discharging process, when a remaining capacity parameter as either one of a voltage and a charging rate of the power storage unit (3) is within a range of a predetermined upper limit value (V_H) or less to indicate that the power storage unit (3) is in a state for charging, the circuit controller (21a) executes first control to control the control circuit unit (2) to charge power released from the first activation device unit (10) to the power storage unit (3),
in a case where a second activation device unit (10) as at least one of the N activation device units (10) is controlled by the activation controller (5) to execute the charging process, when the remaining capacity parameter is within a range of a predetermined lower limit value (V_L) or more to indicate that the power storage unit (3) is in a state for discharging, the circuit controller (21a) executes second control to control the control circuit unit (2) to supply power of the power storage unit (3) to the second activation device unit (10),
a power supply is connected to the control circuit unit (2), and
in the case where the second activation device unit (10) is controlled by the activation controller (5) to execute the charging process, when the remaining capacity parameter of the power storage unit (3) is less than the predetermined lower limit value (V_L), the circuit controller (21a) stops the second control and controls the control circuit unit (2) to supply power of the power supply (6) to the second activation device unit (10).

2. The secondary battery activation system (1) according to Claim 1, further comprising
a discharge circuit (13a) for converting power of the plurality of secondary batteries (30) in each of the N activation device units (10) into thermal energy and discharging the thermal energy, wherein
when the remaining capacity parameter of the power storage unit (3) exceeds the predetermined upper limit value (V_H), the circuit controller (21a) stops the first control, and
when the circuit controller (21a) is stopping the first control while the activation controller (5) is controlling the first activation device unit (10) to execute the discharging process, the activation controller (5) controls the discharge circuit (13a) to discharge, by the discharge circuit (13a), the power of the plurality of secondary batteries (30) in the first activation device unit (10).

3. The secondary battery activation system (1) according to Claim 1 or 2,
the power supply is a commercial AC power supply (6), and
the control circuit unit (2) has an AC/DC power supply circuit (22) including an AC/DC converter (22a) to convert AC power from the commercial AC power supply (6) into DC power.

4. The secondary battery activation system (1) according to Claim 1 or 2, **characterized in that**
a commercial AC power supply (6) is connected to the control circuit unit (2), and
the control circuit unit (2) has
a bidirectional DC/DC circuit (21b) connected to the power storage unit (3) and each of the N activation device units (10) and including a bidirectional DC/DC converter (21c), and
an AC/DC power supply circuit (22) connected to the commercial AC power supply (6) and including an AC/DC converter (22a), wherein
the circuit controller (21a) controls the control circuit unit (2) to supply, by the bidirectional DC/DC circuit (21b), power released from the first activation device unit (10) to the power storage unit (3) during the execution of the first control, and
in the case where the second activation device unit (10) is controlled by the activation controller (5) to execute the charging process, when the remaining capacity parameter of the power storage unit (3) is less than the predetermined lower limit value (V_L), the circuit controller (21a) stops the second control, and controls the control circuit unit (2) to covert, by the AC/DC power supply circuit (22), AC power of the commercial AC power supply (6) into DC power and supply the DC power to the second activation device unit (10).

## Patentansprüche

1. Sekundärbatterie-Aktivierungssystem (1) zur Ausführung von Aktivierungsprozessen, einschließlich eines Ladevorgangs zum Ausführen eines Ladens einer Sekundärbatterie (30) und eines Entladevorgangs zum Ausführen eines Entladens der Sekundärbatterie (30), um die Sekundärbatterie zu aktivieren, umfassend:
eine Energiespeichereinheit (3), die in der Lage ist, Energie zu laden/zu entladen,
N (N bedeutet "mehrere") Aktivierungsvorrichtungs-Einheiten (10), von denen jede jeweils mit mehreren Sekundärbatterien (30) verbunden ist und so konfiguriert ist, dass sie in der Lage ist, den Ladevorgang und den Entladevorgang auszuführen,
einen Aktivierungsregler (5), der die Ausführung des Ladevorgangs und des Entladevorgangs in den N Aktivierungsvorrichtungs-Einheiten (10) steuert,
eine Steuerungsschaltungseinheit (2), die mit der Energiespeichereinheit (3) und den N Aktivierungsvorrichtungs-Einheiten (10) verbunden ist und so konfiguriert ist, dass sie in der Lage ist, den Vorgang einer Energiezulieferung/Energieaufnahme zwischen der Energiespeichereinheit (3) und den Aktivierungsvorrichtungs-Einheiten auszuführen, und
einen Schaltungsregler (21a), der den Vorgang der Energiezulieferung/Energieaufnahme mithilfe der Steuerungsschaltungseinheit (2) steuert, **dadurch gekennzeichnet, dass**,
in dem Fall, dass eine erste Aktivierungsvorrichtungs-Einheit (10) als mindestens eine der N Aktivierungsvorrichtungs-Einheiten (10) von dem Aktivierungsregler (5) gesteuert wird, den Entladevorgang durchzuführen, wenn ein Parameter der verbleibenden Kapazität, bei dem es sich entweder um die Spannung oder die Laderate der Energiespeichereinheit (3) handelt, innerhalb eines Bereichs eines vorgegebenen oberen Grenzwerts (V_H) oder darunter liegt, was anzeigt, dass die Energiespeichereinheit (3) sich in einem Zustand für ein Laden befindet, der Schaltungsregler (21a) eine erste Steuerung durchführt, um die Steuerungsschaltungseinheit (2) zu steuern, die von der ersten Aktivierungsvorrichtungs-Einheit (10) abgegebene Energie in die Energiespeichereinheit (3) zu laden,
in dem Fall, dass eine zweite Aktivierungsvorrichtungs-Einheit (10) als mindestens eine der N Aktivierungsvorrichtungs-Einheiten (10) von dem Aktivierungsregler (5) gesteuert wird, den Ladevorgang durchzuführen, wenn ein Parameter der verbleibenden Kapazität innerhalb eines Bereichs eines vorgegebenen unteren Grenzwerts (V_L) oder darüber liegt, was anzeigt, dass die Energiespeichereinheit (3) sich in einem Zustand für ein Entladen befindet, der Schaltungsregler (21a) eine zweite Steuerung durchführt, um die Steuerungsschaltungseinheit (2) zu steuern, Energie von der Energiespeichereinheit (3) zu der zweiten Aktivierungsvorrichtungs-Einheit (10) zu liefern,
eine Energieversorgung mit der Steuerungsschaltungseinheit (2) verbunden ist, und
in dem Fall, in dem eine zweite Aktivierungsvorrichtungs-Einheit (10) von dem Aktivierungsregler (5) gesteuert wird, den Ladevorgang durchzuführen, der Schaltungsregler (21a) - wenn der Parameter der verbleibenden Kapazität der Energiespeichereinheit (3) weniger als den vorgegebenen unteren Grenzwert (V_L) beträgt - die zweite Steuerung beendet und die Steuerungsschaltungseinheit (2) steuert, Energie von der Energieversorgung (6) zu der zweiten Aktivierungsvorrichtungs-Einheit (10) zu liefern.

2. Sekundärbatterie-Aktivierungssystem (1) gemäß Anspruch 1, des Weiteren umfassend:
eine Entladeschaltung (13a) zum Umwandeln der Energie der Vielzahl von Sekundärbatterien (30) in jeder der N Aktivierungsvorrichtungs-Einheiten (10) in thermische Energie und Entladen der thermischen Energie, wobei
wenn der Parameter der verbleibenden Kapazität der Energiespeichereinheit (3) den vorgegebenen oberen Grenzwert (V_H) überschreitet, der Schaltungsregler (21a) die erste Steuerung beendet, und
wenn der Schaltungsregler (21a) die erste Steuerung beendet, während der Aktivierungsregler (5) die erste Aktivierungsvorrichtungs-Einheit (10) so steuert, dass sie den Entladevorgang durchführt, der Aktivierungsregler (5) die Entladeschaltung (13a) steuert, die Energie der Vielzahl von Sekundärbatterien (30) mittels der Entladeschaltung (13a) in der ersten Aktivierungsvorrichtungs-Einheit (10) zu entladen.

3. Sekundärbatterie-Aktivierungssystem (1) gemäß Anspruch 1 oder Anspruch 2, wobei
die Energieversorgung eine kommerzielle Wechselstrom- Energieversorgung (6) ist, und die Steuerungsschaltungseinheit (2) eine AC/DC- (Wechselstrom/Gleichstrom)-Stromversorgungsschaltung (22) aufweist, die einen AC/DC-Wandler (22a) zur Umwandlung von Wechselstrom aus der kommerziellen Wechselstrom-Energieversorgung (6) in Gleichstrom umfasst.

4. Sekundärbatterie-Aktivierungssystem (1) gemäß Anspruch 1 oder Anspruch 2, **dadurch gekennzeichnet, dass**
eine kommerzielle Wechselstrom-Energieversorgung (6) an die Steuerungsschaltungseinheit (2) angeschlossen ist, und die Steuerungsschaltungseinheit (2) Folgendes aufweist:
eine bidirektionale DC/DC-Schaltung (21b), die mit der Energiespeichereinheit (3) und mit jeder der N Aktivierungsvorrichtungs-Einheiten (10) verbunden ist und die einen bidirektionalen DC/DC-Wandler (21c) umfasst, und
eine AC/DC-Energieversorgung (22), die an die kommerzielle Wechselstromversorgung (6) angeschlossen ist und einen AC/DC-Wandler (22a) umfasst, wobei
der Schaltungsregler (21a) die Steuerungsschaltungseinheit (2) steuert, mittels der bidirektionalen DC/DC-Schaltung (21b) Energie, die von der ersten Aktivierungsvorrichtungs-Einheit (10) abgegeben wird, an die Energiespeichereinheit (3) während der Ausführung der ersten Steuerung zu liefern, und
in dem Fall, in dem die zweite Aktivierungsvorrichtungs-Einheit (10) durch den Aktivierungsregler (5) gesteuert wird, den Ladevorgang auszuführen, der Schaltungsregler (21a) - wenn der Parameter der verbleibenden Kapazität der Energiespeichereinheit (3) weniger als den vorgegebenen unteren Grenzwert (V_L) beträgt - die zweite Steuerung beendet und die Steuerungsschaltungseinheit (2) steuert, mittels der AC/DC-Energieversorgungsschaltung (22) den Wechselstrom der kommerziellen Wechselstrom-Energieversorgung (6) in Gleichstrom umzuwandeln und den Gleichstrom zu der zweiten Aktivierungsvorrichtungs-Einheit (10) zu liefern.

## Revendications

1. Système d'activation de batterie secondaire (1) pour exécuter des processus d'activation incluant un processus de charge pour exécuter une charge d'une batterie secondaire (30) et un processus de décharge pour exécuter une décharge de la batterie secondaire (30) afin d'activer la batterie secondaire (30), comprenant :
une unité de stockage d'énergie (3) capable de charger/décharger de l'énergie ;
N (N est pluriel) unités de dispositif d'activation (10), chacune d'elles est connectée respectivement à une pluralité de batteries secondaires (30), et configurée pour pouvoir exécuter le processus de charge et le processus de décharge ;
un dispositif de commande d'activation (5) qui commande l'exécution du processus de charge et du processus de décharge dans les N unités de dispositif d'activation (10) ;
une unité de circuit de commande (2) connectée à l'unité de stockage d'énergie (3) et aux N unités de dispositif d'activation (10) et configurée pour pouvoir exécuter une opération de distribution/réception d'énergie entre l'unité de stockage d'énergie (3) et les unités de dispositif d'activation (10) ; et
un dispositif de commande de circuit (21a) qui commande l'opération de distribution/réception d'énergie par l'unité de circuit de commande (2), **caractérisé en ce que**
dans un cas où une première unité de dispositif d'activation (10) en tant qu'au moins l'une des N unités de dispositif d'activation (10) est commandée par le dispositif de commande d'activation (5) pour exécuter le processus de décharge, lorsqu'un paramètre de capacité restante en tant que l'un parmi une tension et un taux de charge de l'unité de stockage d'énergie (3) est inférieur ou égal à une valeur de limite supérieure (V_H) prédéterminée pour indiquer que l'unité de stockage d'énergie (3) est dans un état de charge, le dispositif de commande de circuit (21a) exécute une première commande pour commander l'unité de circuit de commande (2) pour charger de l'énergie libérée de la première unité de dispositif d'activation (10) dans l'unité de stockage d'énergie (3),
dans un cas où une deuxième unité de dispositif d'activation (10) en tant qu'au moins l'une des N unités de dispositif d'activation (10) est commandée par le dispositif de commande d'activation (5) pour exécuter le processus de charge, lorsque le paramètre de capacité restante est supérieur ou égal à une valeur de limite inférieure (V_L) prédéterminée pour indiquer que l'unité de stockage d'énergie (3) est dans un état de décharge, le dispositif de commande de circuit (21a) exécute une deuxième commande pour commander l'unité de circuit de commande (2) pour fournir de l'énergie de l'unité de stockage d'énergie (3) à la deuxième unité de dispositif d'activation (10),
une alimentation en énergie est connectée à l'unité de circuit de commande (2), et
dans le cas où la deuxième unité de dispositif d'activation (10) est commandée par le dispositif de commande d'activation (5) pour exécuter le processus de charge, lorsque le paramètre de capacité restante de l'unité de stockage d'énergie (3) est inférieur à la valeur de limite inférieure (V_L) prédéterminée, le dispositif de commande de circuit (21a) arrête la deuxième commande et commande l'unité de circuit de commande (2) pour fournir de l'énergie de l'alimentation en énergie (6) à la deuxième unité de dispositif d'activation (10).

2. Système d'activation de batterie secondaire (1) selon la revendication 1, comprenant en outre :
un circuit de décharge (13a) pour convertir de l'énergie de la pluralité de batteries secondaires (30) dans chacune des N unités de dispositif d'activation (10) en énergie thermique et décharger l'énergie thermique, dans lequel
lorsque le paramètre de capacité restante de l'unité de stockage d'énergie (3) dépasse la valeur de limite supérieure (V_H) prédéterminée, le dispositif de commande de circuit (21a) arrête la première commande, et
lorsque le dispositif de commande de circuit (21a) arrête la première commande pendant que le dispositif de commande d'activation (5) commande la première unité de dispositif d'activation (10) pour exécuter le processus de décharge, le dispositif de commande d'activation (5) commande le circuit de décharge (13a) pour décharger, par le circuit de décharge (13a), l'énergie de la pluralité de batteries secondaires (30) dans la première unité de dispositif d'activation (10).

3. Système d'activation de batterie secondaire (1) selon la revendication 1 ou 2,
l'alimentation en énergie est une alimentation en énergie CA commerciale (6), et
l'unité de circuit de commande (2) présente un circuit d'alimentation en énergie CA/CC (22) incluant un convertisseur CA/CC (22a) pour convertir l'énergie CA de l'alimentation en énergie CA commerciale (6) en énergie CC.

4. Système d'activation de batterie secondaire (1) selon la revendication 1 ou 2, **caractérisé en ce que**
une alimentation en énergie CA commerciale (6) est connectée à l'unité de circuit de commande (2), et
l'unité de circuit de commande (2) présente
un circuit CC-CC bidirectionnel (21b) connecté à l'unité de stockage d'énergie (3) et à chacune des N unités de dispositif d'activation (10) et incluant un convertisseur CC-CC bidirectionnel (21c), et
un circuit d'alimentation en énergie CA-CC (22) connecté à l'alimentation en énergie CA commerciale (6) et incluant un convertisseur CA-CC (22a), dans lequel
le dispositif de commande de circuit (21a) commande l'unité de circuit de commande (2) pour fournir, par le circuit CC-CC bidirectionnel (21b), de l'énergie libérée de la première unité de dispositif d'activation (10) à l'unité de stockage énergie (3) pendant l'exécution de la première commande, et
dans le cas où la deuxième unité de dispositif d'activation (10) est commandée par le dispositif de commande d'activation (5) pour exécuter le processus de charge, lorsque le paramètre de capacité restante de l'unité de stockage d'énergie (3) est inférieur à la valeur de limite inférieure (V_L) prédéterminée, le dispositif de commande de circuit (21a) arrête la deuxième commande, et commande l'unité de circuit de commande (2) pour convertir, par le circuit d'alimentation en énergie CA-CC (22), de l'énergie CA de l'alimentation en énergie CA commerciale (6) en énergie CC et fournir l'énergie CC à la deuxième unité de dispositif d'activation (10).
